# EUROPEAN PATENT SPECIFICATION

(11) **EP 1 765 660 B1**
(45) Date of publication and mention of the grant of the patent: **16.02.2011**
(21) Application number: 05749836.2
(22) Date of filing: 01.06.2005
(51) Int. Cl.: B62D 55/088, B60S 1/68

(54) **DEVICE TO REDUCE DEBRIS IN TRACKED VEHICLE WHEELS**
VORRICHTUNG ZUR VERRINGERUNG VON SCHMUTZ BEI MIT LAUFKETTEN VERSEHENEN FAHRZEUGRÄDERN
DISPOSITIF DESTINE A REDUIRE DES DEBRIS DANS LES ROUES DE VEHICULES A CHENILLES

(30) Priority: 09.06.2004 CA 2470553; 11.04.2005 CA 2504051
(43) Date of publication of application: 28.03.2007
(73) Proprietor: Soucy International, Inc., Drummondville, Québec J2B 6W3 (CA)
(72) Inventor: BRETON, Rémi, Saint-Charles-de-Drummond,Québec J2C 8K5 (CA); VERVILLE, Louis-James, St-Nicéphore, Québec J2A 4E1 (CA)
(74) Representative: Vuillermoz, Bruno
(86) International application number: PCT/CA2005/000839
(87) International publication number: WO 2005/120937

(56) References cited:
- US-A- 3 913 943
- US-A- 4 830 439
- US-A- 5 005 922
- US-A- 5 226 703
- US-A- 5 725 292
- US-A1- 2002 148 065

## Description

### FIELD OF THE INVENTION

The present invention relates to track type vehicles, and more specifically to a device to reduce the accumulation of snow, ice, mud, soil and other debris in the idler and/or sprocket wheels of tracked vehicles during driving operations.

### BACKGROUND OF THE INVENTION

Conventionally, track type vehicles comprise a set of wheels on each side of the vehicle that run in a track. During the operation, the track picks up materials such as snow, ice, mud, soil and other debris from the ground and carries them into the wheel where they often become packed between the inner surface of the track and the wheel. In the case of rubber tracks, this can result in de-tracking of the track from the wheels.

There exist some devices to scrape the mud from the wheels of tracked vehicles.

U.S. Patent No. 4,830,439 issued to Collins et al. on May 16, 1989 disclosed a scraper for the sprocket wheels of tracked vehicles. The scraper comprises a support mounted to the vehicle and a scraper bar mounted transversally near the hub of the sprocket wheel such as to prevent the accumulation of debris around the hub. This scraper is relatively simple in its construction. However, the scraper is rigid and therefore does not allow for movement of the wheel.

U.S. Patent No. 5,226,703 issued to Norman on Jul. 13, 1993 disclosed an idler roller mounting/scraper for track vehicle which includes mounting bracket with two sets of teeth on opposite sides of the roller in order to scrape and remove mud and debris. While this device may be suitable for the particular purpose which it addresses, the design of this device is very complex.

U.S. Patent No. 5,725,292 issued to Keedy et al on May 10, 1998 disclosed a scraping apparatus for a track idler which provides a scraper assembly that defines a plurality of scraping portions that continuously engage the contact surfaces of the idler to remove foreign material from there before the contact surfaces engage other track chain components. While this design may be operated with some success, this design is subject to severe wear.

U.S. Patent No. 5,697,683 issued to Arulandu et al. on Dec. 16, 1997 disclosed a biased scraping apparatus for an idler which provides a scrapper assembly that defines a plurality of scraping portions that are adapted to carry a scraping insert on an end portion thereof. While this device may be suitable for the particular purpose which it addresses, the design of this device is relatively intricate and significantly costly.

U.S. Patent No. 6,019,443 issued to Freeman on Feb. 1, 2000 disclosed a debris cutter for sprocket drive which has stationary cutter blades fixed to a chassis of the tractor to cut refuse entrained between the sprocket and the chassis. While this device may be suitable for the particular purpose to which it addresses, it is operative only during one-way rotation of the wheel.

It is more effective to prevent or reduce the accumulation of snow, ice, mud, soil and other debris in the track wheels instead of having to scrape and remove the snow, , ice, mud, soil and debris later. Thus, there is a need to develop a device to reduce the accumulation of snow, ice, mud, soil and other debris in the track wheels of tracked vehicles rather than to remove it once it has so accumulated. Furthermore, there is a need for such an apparatus that applies very little pressure on the wheels in contrast to existing scraper solutions.

### OBJECTS OF THE INVENTION

Accordingly, an object of the present invention is to provide a device to reduce the accumulation of snow, ice, mud, soil and other debris in the idler and/or sprocket wheels of tracked vehicles that obviates the above-mentioned disadvantages.

A further object of the present invention is to provide a device to reduce the accumulation of snow, ice, mud, soil and other debris in the idler and/or sprocket wheels of tracked vehicles which is effectively operative regardless of the direction of wheel rotation.

One more object of the present invention is to provide a device to reduce the accumulation of snow, ice, mud, soil and other debris in the idler and/or sprocket wheels of tracked vehicles which requires less maintenance.

Still a further object of the present invention is to provide a device to reduce the accumulation of snow, ice, mud, soil and other debris in the idler and/or sprocket wheels of tracked vehicles which is easy to manufacture.

Another object of the present invention is to provide a device to reduce the accumulation of snow, ice, mud, soil and other debris in the idler and/or sprocket wheels of tracked vehicles which is inexpensive.

Other and further objects and advantages of the present invention will be obvious upon an understanding of the illustrative embodiments about to be described or will be indicated in the appended claims, and various advantages not referred to herein will occur to one skilled in the art upon employment of the invention in practice.

### SUMMARY OF THE INVENTION

To attain these and other objects which will become more apparent as the description proceeds according to one aspect of the present invention, there is provided a device to reduce the accumulation of snow, ice, mud, soil and other debris in the sprocket and/or idler wheels of tracked vehicles.

Such wheels are often made in two parts: an outer wheel and an inner wheel. These wheels are joined near the axel opening and are separated near their outer perimeter such that they may receive the guide lugs or horns located on the inner surface of the track.

A first embodiment of the invention comprises a support being adjustably associated with the tracked vehicle and having fastening means located near the idler and/or sprocket wheels, a band having a connecting part customized to be adjustably secured by the fastening into position about the wheel and a collar part freely extending from the connecting part and at least partially embracing the wheel hub for remaining in a constant slipping contact or near contact with at least part of the interior of the wheel to reduce the accumulation of snow, ice, mud, soil and other debris on the idler and/or sprocket wheels during a driving condition of the tracked vehicle. Preferably, the band is made from a resilient material such as spring steel or reinforced rubber.

A second embodiment of the device to reduce the accumulation of snow, ice, mud, soil and other debris in the sprocket and/or idler wheels of tracked vehicles comprises a support being adjustably associated with the tracked vehicle and having fastening means located near the track wheel, a band having a connecting part customized to be adjustably secured by the fastening means into position about the track wheel, a collar part at least partially embracing the wheel to remain in a constant slipping contact or near contact with at least part of the interior of the wheel to reduce the accumulation of snow, ice, mud, soil and other debris in the idler and/or sprocket wheels during a driving condition of the tracked vehicle, and a linking part adjustably linking the collar part to the connecting part.

It is preferable that the collar has a contact surface generally matching the configuration of the track receiving internal surface of the wheel.

Preferably, the collar has at least one slipper which is inwardly projected toward the track wheel to be in a constant slipping contact or near contact with the same. And also, it is preferable that at least the interior of the collar be made from a low friction material such as UHMW polyethylene.

Preferably, the connecting part is made from a resilient material. It is also preferable that the collar is made from a resilient material such as spring steel or rubber with wire or other reinforcing inserts.

### BRIEF DESCRIPTION OF THE DRAWINGS

For a fuller understanding of the nature and object of the invention, reference should be had to the following detailed description taken in connection with the accompanying drawings in which:
Figure 1 is a fragmentary isometric side view of one of the embodiments of the device to reduce the accumulation of snow, ice, mud, soil and other debris in the track wheels of tracked vehicles, according to the present invention, in working position around an idler wheel; and
Figure 2 is an isometric side view of another embodiment of the device to reduce the accumulation of snow, ice, mud, soil and other debris in the wheels of tracked vehicles.
Figure 3 is a cross-sectional view of the device and wheel shown in figure 1 also showing the track.

### DETAILED DESCRIPTION OF THE PREFERRED EMBODIMENTS

With reference to the annexed drawings, the preferred embodiments of the present invention will be herein described for indicative purposes and by no means as of limitation.

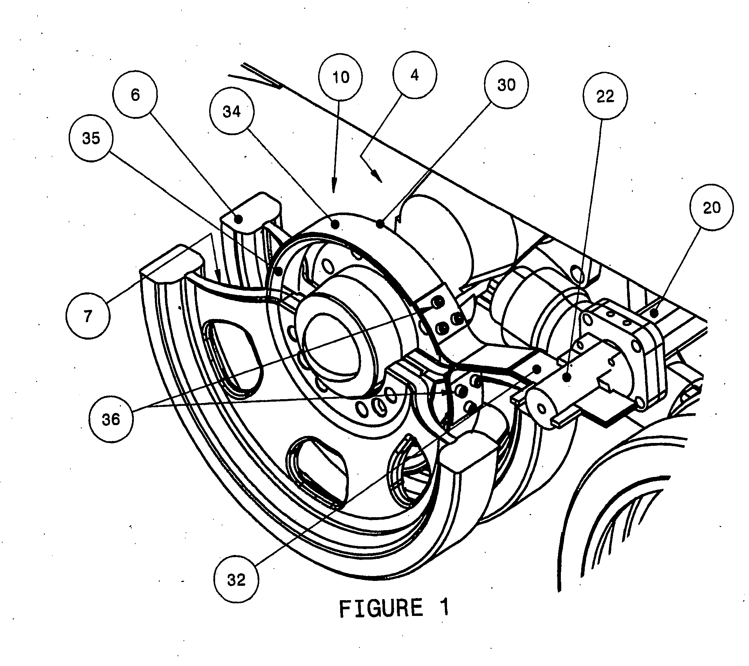

Figure 1 shows a device 10 to reduce the accumulation of snow, ice, mud, soil and other debris in the idler wheel of a tracked vehicle as installed.

The device 10 includes an attachment portion 32 and a band portion 30. A support 20 is adjustably associated with the tracked vehicle 4 and is provided with holding means 22 located near the idler wheel 6.

The band portion 30 and the attachment portion 32 are preferably made from a resilient material.

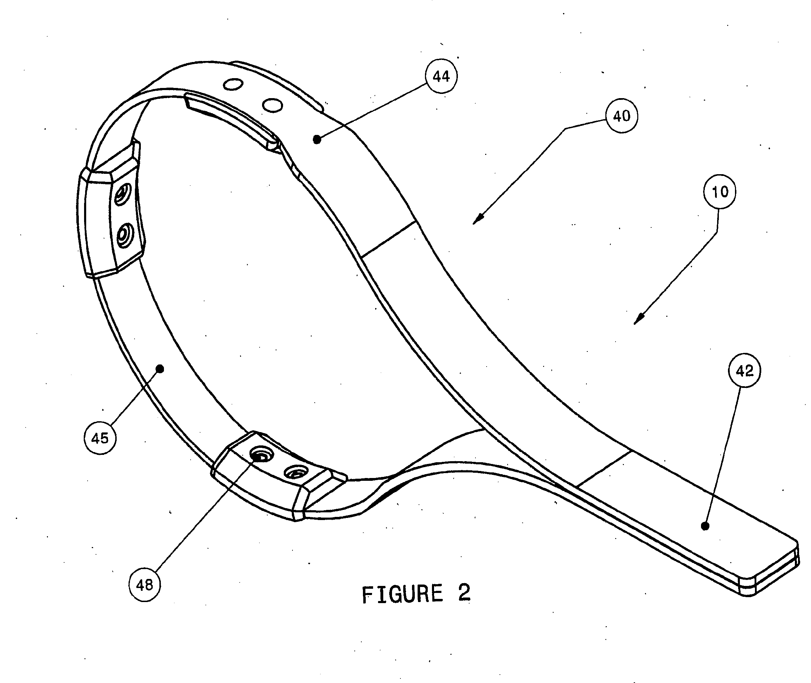

In Figure 1 the band portion 30 is made of spring steel while the band portion 40 shown in Figure 2 is made of reinforced rubber.

As seen in Figure 1, the attachment portion 32 is customized to be adjustably secured near the idler wheel by the holding mean 22. The band portion 30 freely extends from the attachment portion 32 and at least partially embraces said wheel for remaining in a constant slipping contact or near contact with at least part of the track wheel 6 to reduce the accumulation of snow, ice, mud, soil and other debris on the wheels 6 during a driving condition of the tracked vehicle 4. The band portion 30 is fixed to the attachment portion 32 by bolt 36 or other known means.

Figure 2 illustrates a second embodiment of the device 10 which allows to reduce the accumulation of snow, ice, mud, soil and other debris in the track wheels of tracked vehicles. In the second embodiment of the device 10 the band portion 40 is integral with the attachment portion 42 and is made of reinforced rubber.

In accordance with the invention, in the embodiment of Figure 1, the band portion 30 has an internal surface 35 generally matching the configuration of the interior portions 7 and 8 of the wheel 6 and an external surface 34 on which snow, ice, mud, soil or other debris may accumulate. In Figure 2 the internal surface 45 is discontinuous and is made of a plurality of slipper segments 48. The slipper segments 48 are preferably made from a low friction material such as UHMW polyethylene. On the other hand, it is preferable that a minimum amount of friction be present between the internal surfaces 7 and 8 of wheel 6 and any snow, ice, mud, soil or other debris which may become lodged between the track, the internal surfaces 7 and 8 and the external surface 44 such that such snow, ice, mud, soil or other debris be dislodged as a result of the relative movement of such snow, ice or other debris in relation to the attachment portion 42.

As is well understood, the internal surface 45 and the slipper elements 48 may assume a variety of forms, lengths and cross-sectional profiles (not shown) as long as they are complementary with the configuration of the internal surfaces 7 and 8 of wheel 6. Also, the device 10 may be made from any suitable material well known in the art.

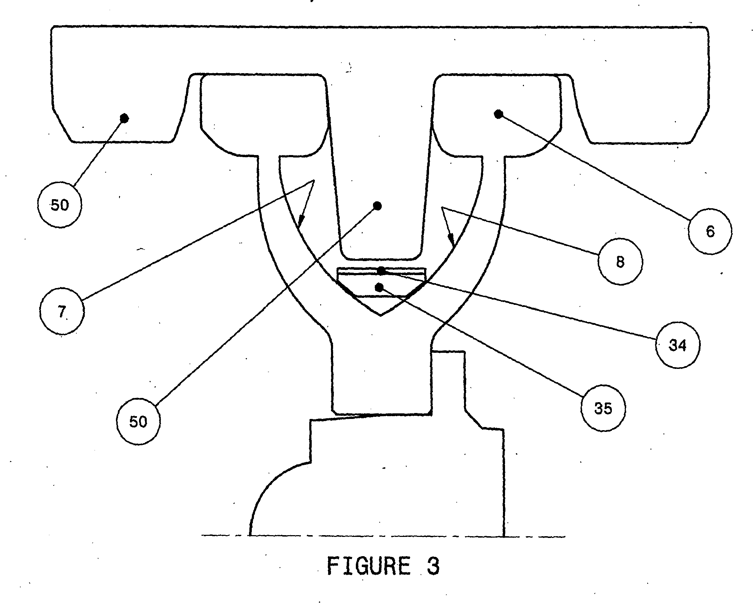

As seen in Figure 3, during normal operation of the vehicle, especially when operating a turn, snow, ice, mud, soil or other debris is introduced in the space between the track 50, the internal wheel surfaces 7 and 8 and the external band surface 34. As the wheel 6 turns (either clockwise or counterclockwise), this snow, ice, mud, soil or other debris is entrained by the friction between it and the track 50 and the internal wheel surfaces 7 and 8. It slides over external surface 34 until it reaches the attachment portion 32 where it is forcefully expelled.

During any driving condition when the track vehicle 4 is moving forward, backwards or doing any maneuvers when the track wheel 6 rotates, the band portion 30 of the device 10 effectively prevents any significant accumulation of snow, ice, mud, soil or other debris from between the internal surfaces 7 and 8 of wheel 6 and the track 50. Device 10 is bi-directional in the sense that it works effectively in either direction of track wheel rotation, and is extremely simple in design and effective in operation.

The drawings and the description attached to it are only intended to illustrate the idea of the invention. As to the details, the invention may vary within the scope of the claims. So, the shape of the device 10 may be formed as desired, considering the needs and specific track wheel 6 models.

Although the present device to reduce the accumulation of snow, ice, mud, soil and other debris in the wheels of tracked vehicles has been described with a certain degree of particularity, it is to be understood that the disclosure has been made by way of example only and that the present invention is not limited to the features of the embodiment(s) described and illustrated herein, but includes all variations and modifications within the scope of the invention as hereinafter claimed.

## Claims

1. A device (10) to reduce the accumulation of snow, ice, mud, soil and other debris in a wheel (6) of tracked vehicles (4) of the type having an inside wheel portion (8) and an outside wheel portion (7) defining an open space there between, said device (10) comprising a support (20) being adjustably attached to said tracked vehicle (4) and having fastening means (22) located near said space,
**characterised in that** said device (10) further comprises a band (30/40, 32/42) customized to be adjustably secured by said fastening means (22) into position around said wheel (6) within said space.

2. A device as claimed in claim 1 wherein said wheel (6) is an idler wheel or a sprocket wheel.

3. A device as claimed in claim 2 wherein said band (30/40, 32/42) is made of a resilient material.

4. A device as claimed in claim 3 wherein said band (40, 42) is made of reinforced rubber.

5. A device as claimed in claim 3 wherein said band (30, 32) is made of spring steel.

6. A device (10) to reduce the accumulation of snow, ice, mud, soil and other debris in the wheels (6) of tracked vehicles (4), said device (10) comprising a support (20) being adjustably attached to said tracked vehicle and having fastening means (22) located near said track wheel (6),
**characterised in that** said device (10) further comprises a band having a connecting part (32, 42) customized to be adjustably secured by said fastening means (22) into position near the wheel (6), a collar part (30, 40) at least partially embracing the interior of said wheel (6) to remain in a constant slipping contact or in near contact with at least part of said wheel interior to reduce the accumulation of said snow, ice, mud, soil and other debris in the wheels (6) during the operation of the tracked vehicle, and a linking part adjustably linking the collar part to the connecting part.

7. The device according to claim 6, wherein the collar part (30, 40) has a contact surface (35, 45) generally matching a track lug-receiving surface of the wheel (6).

8. The device according to any one of claims 6 or 7, wherein the collar part (30, 40) has at least one slipper (48) which is inwardly projected towards the track wheel (6) to be in a constant slipping contact or in near contact with the same.

9. The device according to any one of claims 6 to 8, wherein the collar part (30, 40) is made from a low friction material.

10. The device according to claim 6, wherein the band is made from a resilient material.

11. The device according to claim 7, wherein the connecting part (32, 42) is made from a resilient material.

12. The device according to any one of claims 7 to 9, wherein the collar part (30, 40) is made from a resilient material.

## Patentansprüche

1. Vorrichtung (10) zum Mindern der Ansammlung von Schnee, Eis, Schlamm, Erde und anderer Ablagerungen in einem Rad (6) von spurgebundenen Fahrzeugen (4) der Bauart mit einem innenliegenden Radabschnitt (8) und einem außenliegenden Radabschnitt (7), die einen offenen Raum zwischen sich bilden, wobei die Vorrichtung (10) eine Halterung (20) umfasst, die einstellbar an dem spurgebundenen Fahrzeug (4) angebracht ist und Befestigungsmittel (22) aufweist, die nahe dem Raum angeordnet sind,
**dadurch gekennzeichnet, dass** die Vorrichtung (10) darüber hinaus ein Band (30/40, 32/42) umfasst, das dazu angepasst ist, in dem Raum durch die Befestigungsmittel (22) in Position um das Rad (6) einstellbar befestigt zu werden.

2. Vorrichtung nach Anspruch 1, wobei es sich bei dem Rad (6) um ein Zwischenrad oder ein Kettenrad handelt.

3. Vorrichtung nach Anspruch 2, wobei das Band (30/40, 32/42) aus einem elastischen Material hergestellt ist.

4. Vorrichtung nach Anspruch 3, wobei das Band (30/40, 32/42) aus verstärktem Gummi hergestellt ist.

5. Vorrichtung nach Anspruch 3, wobei das Band (30, 32) aus Federstahl hergestellt ist.

6. Vorrichtung (10) zum Mindern der Ansammlung von Schnee, Eis, Schlamm, Erde und anderer Ablagerungen in den Rädern (6) von spurgebundenen Fahrzeugen (4), wobei die Vorrichtung (10) eine Halterung (20) umfasst, die einstellbar an dem spurgebundenen Fahrzeug angebracht ist und Befestigungsmittel (22) aufweist, die nahe dem Spurrad (6) angeordnet sind,
**dadurch gekennzeichnet, dass** die Vorrichtung (10) darüber hinaus ein Band mit einem Verbindungsteil (32, 42), das dazu angepasst ist, durch die Befestigungsmittel (22) in Position nahe dem Rad (6) einstellbar befestigt zu werden, ein Muffenteil (30, 40), das den Innenraum des Rads (6) zumindest teilweise umschließt, um in ständigem Gleitkontakt oder in nahem Kontakt mit zumindest einem Teil des Radinnenraums zu bleiben, um die Ansammlung von Schnee, Eis, Schlamm, Erde und anderer Ablagerungen in den Rädern (6) während des Betriebs des spurgebundenen Fahrzeugs zu mindern, und ein Anlenkteil umfasst, um das Muffenteil einstellbar am Verbindungsteil anzulenken.

7. Vorrichtung nach Anspruch 6, wobei das Muffenteil (30, 40) eine Kontaktfläche (35, 45) aufweist, die allgemein einer Spursteg aufnehmenden Fläche des Rads (6) angepasst ist.

8. Vorrichtung nach einem der Ansprüche 6 oder 7, wobei das Muffenteil (30, 40) mindestens ein Gleitstück (48) aufweist, das nach innen zum Spurrad (6) hin vorsteht, um in einem ständigen Gleitkontakt oder in nahem Kontakt mit diesem zu sein.

9. Vorrichtung nach einem der Ansprüche 6 bis 8, wobei das Muffenteil (30, 40) aus einem Material mit niedrigem Reibungskoeffizienten hergestellt ist.

10. Vorrichtung nach Anspruch 6, wobei das Band aus einem elastischen Material hergestellt ist.

11. Vorrichtung nach Anspruch 7, wobei das Verbindungsteil (32, 42) aus einem elastischen Material hergestellt ist.

12. Vorrichtung nach einem der Ansprüche 7 bis 9, wobei das Muffenteil (30, 40) aus einem elastischen Material hergestellt ist.

## Revendications

1. Dispositif (10) destiné à réduire l'accumulation de neige, glace, boue, terre et autres débris dans une roue (6) de véhicules à chenilles (4) du type présentant une partie roue intérieure (8) et une partie roue extérieure (7) définissant un espace ouvert entre elles, ledit dispositif (10) comprenant un support (20) fixé de manière ajustable audit véhicule à chenilles (4) et présentant un moyen d'attache (22) situé à proximité dudit espace,
**caractérisé en ce que** ledit dispositif (10) comprend en outre une bande (30/40, 32/42) adaptée pour être maintenue en position de manière ajustable par ledit moyen d'attache (22) autour de ladite roue (6) dans ledit espace.

2. Dispositif selon la revendication 1, dans lequel ladite roue (6) est une roue folle ou une roue dentée.

3. Dispositif selon la revendication 2, dans lequel ladite bande (30/40, 32/42) est réalisée en un matériau résilient.

4. Dispositif selon la revendication 3, dans lequel ladite bande (40, 42) est réalisée en caoutchouc renforcé.

5. Dispositif selon la revendication 3, dans lequel ladite bande (30, 32) est réalisée en acier à ressorts.

6. Dispositif (10) destiné à réduire l'accumulation de neige, glace, boue, terre et autres débris dans les roues (6) de véhicules à chenilles (4), ledit dispositif (10) comprenant un support (20) fixé de manière ajustable audit véhicule à chenilles et présentant un moyen d'attache (22) situé à proximité de ladite roue à chenilles (6),
**caractérisé en ce que** ledit dispositif (10) comprend en outre une bande de présentant une pièce de liaison (32, 42) adaptée pour être maintenue en position de manière ajustable à proximité de la roue (6) par ledit moyen d'attache (22), une pièce formant collier (30, 40) épousant au moins partiellement l'intérieur de ladite roue (6) afin de rester en contact glissant constant ou en contact proche avec au moins une partie dudit intérieur de roue afin de réduire l'accumulation desdits neige, glace, boue, terre et autres débris dans les roues (6) pendant le fonctionnement du véhicule à chenilles, et une partie de liaison reliant de manière ajustable la partie formant collier à la pièce de liaison.

7. Dispositif selon la revendication 6, dans lequel la partie formant collier (30, 40) présente une surface de contact (35, 45) correspondant généralement à une surface, recevant un crampon de chenille, de la roue (6).

8. Dispositif selon l'une quelconque des revendications 6 ou 7, dans lequel la pièce formant collier (30, 40) présente au moins une glissière (48) qui fait saillie vers l'intérieur en direction de la roue à chenilles (6) pour être en contact glissant constant ou en contact proche avec celle-ci.

9. Dispositif selon l'une quelconque des revendications 6 à 8, dans lequel la pièce formant collier (30, 40) est réalisée à partir d'un matériau à faible coefficient de frottement.

10. Dispositif selon la revendication 6, dans lequel la bande est réalisée à partir d'un matériau résilient.

11. Dispositif selon la revendication 7, dans lequel la pièce de liaison (32, 42) est réalisée à partir d'un matériau résilient.

12. Dispositif selon l'une quelconque des revendications 7 à 9, dans lequel la pièce formant collier (30, 40) est réalisée à partir d'un matériau résilient.
